# EUROPEAN PATENT SPECIFICATION

(11) **EP 2 302 748 B1**
(45) Date of publication and mention of the grant of the patent: **16.05.2012**
(21) Application number: 09466020.6
(22) Date of filing: 23.09.2009
(51) Int. Cl.: H02B 11/28

(54) **Medium or high voltage switchgear apparatus and method of earthing**
Mittel- oder Hochspannungsschaltvorrichtung und Erdungsverfahren
Appareil de commutation moyenne ou haute tension et procédé de mise à la terre

(43) Date of publication of application: 30.03.2011
(73) Proprietor: ABB Technology, 8050 Zürich (CH)
(72) Inventor: Vrbka, Pavel, 59262 Nedvedice (CZ); Michlcek, Emil, 61300 Brno (CZ)
(74) Representative: Kania, Frantisek

(56) References cited:
- EP-A- 2 071 686
- CH-A- 472 794
- FR-A- 2 144 542
- GB-A- 686 684
- GB-A- 897 216
- GB-A- 965 013

## Description

The invention relates to a medium or high voltage switchgear apparatus as well as to a method of earthing two current inlet / outlet systems in a medium or high voltage switchgear apparatus using one circuit breaker.

### Prior art

Medium or high voltage switchgear apparatuses are used in electric power systems to make and break connection between two current inlet / outlet systems and to earth any or both of the two current inlet / outlet systems as necessary. In this specification, the term "earth" or "earthing contact" stands for a point having substantially the same or almost the same electrical potential as that of earth or ground. The above mentioned apparatuses usually comprise the two current inlet / outlet systems, at least one earthing contact and at least one circuit breaker. Circuit breakers are used in making the connection between two medium or high voltage electrical systems to avoid an arc between the two systems upon bringing the connectors of the system near to each other. If there is only one circuit breaker the two current inlet / outlet systems in a medium or high voltage switchgear are earthed in the following steps: the circuit breaker is switched OFF and connected to the first current inlet / outlet system and to the earthing contact; then the circuit breaker is switched ON so that the first current inlet / outlet system is earthed. Subsequently the circuit breaker might be switched OFF, disconnected from the first current inlet / outlet system (and optionally from the earthing contact) and used for earthing the second current inlet / outlet system in a similar way. However the maintenance of the apparatus earthed in such a way would be hazardous for the operating personal because of possible stray voltages in the first current inlet / outlet system which is no more connected to the earthing contact. Therefore an additional circuit breaker or earthing switch is used for earthing the second current inlet / outlet system after the first current inlet / outlet system has been earthed by the first circuit breaker. Of course, such additional apparatuses raise cost as well as space requirements for said switchgear and the earthing process in the switchgear is slowed down by the process of preparing and coupling of the additional earthing switch, resp. a second circuit breaker.

A switch gear assembly comprising a movable circuit breaker and shrouded current inlet / outlet means has been described in GB 965,013.

### Summary of the invention

Therefore it is an object of the invention to provide a method of earthing two current inlet / outlet systems (1, 2) in a medium or high voltage switchgear using one circuit breaker and to provide a switchgear apparatus to be used tor such method.

Said object is achieved by a method of earthing a first and a second current inlet / outlet systems in a medium or high voltage switchgear comprising a circuit breaker, wherein the method comprises the following steps:
a) switching OFF the circuit breaker;
b) connecting the circuit breaker to the first current inlet / outlet system as well as to an earthing contact;
c) switching the circuit breaker ON;
d) providing a direct connection between the first current inlet / outlet system and an earthing contact via a connecting element;
e) switching the circuit breaker OFF;
f) disconnecting the circuit breaker at least from the first current inlet / outlet system;
g) connecting the circuit breaker (3) between the second current inlet / outlet system and an earthing contact; and
h) switching the circuit breaker ON.

In other words, at the beginning the first current inlet / outlet system is earthed using a circuit breaker, then a second connection is made between the first current inlet / outlet system and an earthing contact by means of a simple connecting element, which does not have to be a circuit breaker or any other special device as the first current inlet / outlet system has been earthed already and there is no danger of an arc ignition between the connecting element and the first current inlet / outlet system. Then the circuit breaker may be switched OFF, disconnected from the first current inlet / outlet system and used for earthing the second current inlet / outlet system. Finally, as the first current inlet / outlet system is connected to the earthing contact via the connecting element and the second current inlet / outlet system is earthed via the circuit breaker, there is no danger of stray currents.

Preferred embodiments of the method are defined in the dependant claims.

The above mentioned object is achieved also by a medium or high voltage switchgear apparatus for making and breaking connection between a first and a second current inlet / outlet system, the apparatus comprising a casing, inside which a first current inlet / outlet system, a second current inlet / outlet system, one or more earthing contacts and a circuit breaker are disposed, and according to the invention the circuit breaker is movable relative to the first and to the second current inlet / outlet system to a position in which the circuit breaker is connected between the first current inlet / outlet system and the second current inlet / outlet system, to another position in which it is connected between the first current inlet / outlet system and an earthing contact, and to yet another position in which it is connected between the second current inlet / outlet system and an earthing contact, whereas the apparatus further comprises a movable connecting element for making a connection between the first current inlet / outlet system and an earthing contact when the circuit breaker is switched ON and connected between the first current inlet / outlet system and an earthing contact and for keeping the connection after the circuit breaker has been switched OFF and disconnected at least from the first current inlet / outlet system.

As circuit breakers, vacuum interruptors, air circuit breaker, breakers filled with sulfur hexafluorid gas and other suitable circuit breakers may be used.

### Brief description of the drawings

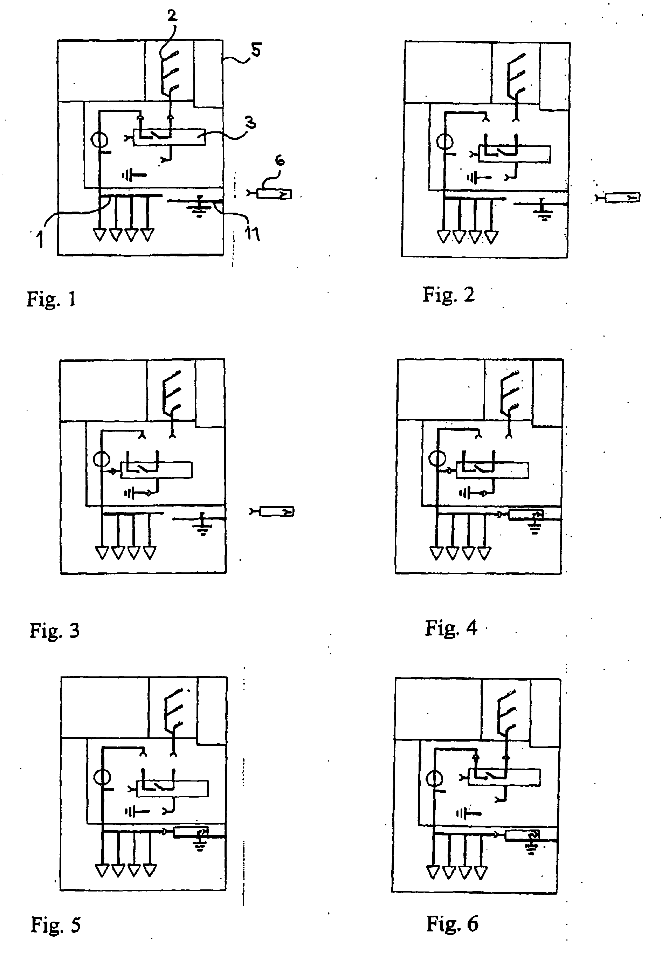

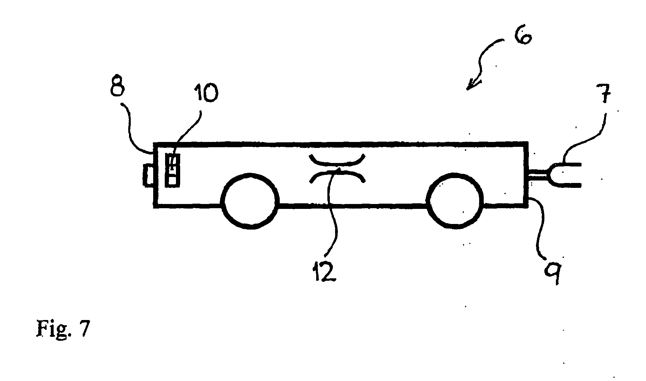

The invention will be described in more detail with respect to the drawings in which Fig. 1 through 6 show the successive steps of the operation of the switchgear apparatus according to the invention and Fig. 7 is a schematic side view of a preferred embodiment of the connecting element. To enhance the clarity of Figs. 1 through 6 the reference numerals have not been inserted in Figs. 2 through 6.

### Preferred embodiments of the invention

As mentioned above Figs. 1 through 6 illustrate the method of earthing cables and busbars in a switchgear apparatus which is intended for making and breaking connection between a first current inlet / outlet system 1, e.g. cables, and a second current inlet / outlet system 2, e.g. busbars with tee-offs, using a circuit breaker 3. In the embodiment illustrated the switchgear comprises a casing 5 inside which the first current inlet / outlet system 1 and the second current inlet / outlet system 2 are fixed. There is a circuit breaker 3 movably arranged inside the casing 5. Two opposite side walls of the casing 5 are provided with a pair of parallel guiding rails 11 arranged so as to guide a connecting element 6 when moving to or from a connection with the first current inlet / outlet system 1. If the cables are to be disconnected from the busbar, the circuit breaker 3 is switched OFF so that the connection between the cables and the busbars is interrupted (Fig. 1) and the circuit breaker 3 is moved to be disconnected from the cables as well as from the busbars (Fig. 2). To earth the cables, the circuit breaker 3 (switched OFF) is moved to be connected to the cables and to an earthing contact (Fig.3). Then the circuit breaker 3 is switched ON and thus the cables are earthed. To earth the busbars as well, first the connecting element 6 is moved into the casing 5 using the rails 11 for guiding the connecting element 6 inside the casing 5 until the connecting element 6 is connected to the cables and to an earthing contact and the connecting element 6 is locked in that position by means of a locking device in order to prevent any movement of the connecting element 6 out of that position. Because the cables have been earthed before the connecting element has approached the cables, there is no risk of an arc occurrence when making said connection so that the connecting element does not need to be a special circuit breaker or earthing switch. Then the circuit breaker 3 is switched OFF, while the cables are still earthed via the connecting element 6 (Fig. 4) and the circuit breaker is moved to be disconnected from the cables and from the earthing contact (Fig. 5). Finally, the circuit breaker (switched OFF) is moved to be connected to the busbars and then it is switched ON (Fig. 6), so that both the cables as well as the busbars are earthed. Now, the operating personnel may attend to any required maintenance or repair services without any risk of being injured by short time currents or any residual voltage etc.

As shown in Fig. 7 a preferred embodiment of the connecting element 6 comprises a frame having a front part 9, a back part 8 and two side walls, wherein there are three contact pieces 7 at the front part 9 of the connecting element 6 for connecting the connecting element 6 to the first current inlet / outlet system 1. There is a contact means 12 at one lateral side of the connecting element 6 and the contact pieces 7 are interconnected with the contact means 12 via suitable connecting means (e.g. a copper bar with a main earthing bus bar) arranged inside the frame. The frame is provided with four wheels arranged in such a manner to be driven on a pair of guiding rails 11 attached parallel to each other at opposing side walls of the casing 5. An earthing strip forming one of the earthing contacts protrudes from the casing 5 at a point where it may be inserted into the contact means 12 by simply driving the connecting element 6 on the guiding rails 11 into the position in which the connecting element 6 has got its contact pieces 7 connected to the first current inlet / outlet system 1. To prevent any accidental movement of the connecting element 6 out of the operating position a locking device may be provided at the connecting element 6 and / or at the casing 5. As shown in Fig. 7, the locking device may comprise e.g a pair of spring loaded projections 10 extending sideways from the back part 8 of the connecting element 6 and being connected with a control linkage operable by means of a key. The side walls of the casing 5 are provided with a pair of matching recesses into which the spring loaded projections 10 protrude when the connecting element 6 is in the working position connected to the first current inlet / outlet system 1 and the earthing contact. The key may be a shaped end of an insulating pole which may be inserted into a complementary opening in the lock and by turning the pole the lock is opened, i.e. the projections 10 are pulled inside the back part 8 of the frame. Then the connecting element 6 may be pulled out of the casing 5 wherein the insulating pole is used as a detachable grip for a safe manipulation with the connecting element 6.

Although only the above embodiment has been described in detail as to most preferable one comprising the connecting element in the form of a slidable or drivable truck, a man skilled in the art would recognise other possible forms of the connecting element and / or of the way of driving it into contact with the first current inlet / outlet system and an earthing contact, e.g. the connecting element may be arranged permanently inside the casing and movable between a working position and a disconnected position. The connecting element may be even hinged to the casing and then the movement of the connecting element between the operating position and the disconnected position may be realized by swivelling the connecting element around a vertical or horizontal or otherwise arranged axis. In that case the connecting element may be connected to an earthing contact permanently. The lock, too, may be constructed in other ways e.g. as a detent arranged pivotally or slidingly at the casing and adapted to engage the back part 8 and / or front part 9 of the connecting element 6 when in the working position. The connecting element 6 and / or the circuit breaker 3 may be provided with driving mechanisms for moving them in the required positions. It is also possible to use a portable short-circuiting device as the connecting element 6.

Although it is preferable that the circuit breaker is movable and the two current inlet / outlet systems 1, 2 have a fixed position inside the casing it is also possible to arrange the two current inlet / outlet systems 1, 2 movably and the circuit breaker 3 in a fixed position. Another possible embodiment comprises a movably arranged circuit breaker 3 and the two current inlet / outlet systems 1, 2, one of them movably arranged and the other one stationary.

The earthing strip forming the earthing contact may be formed long enough to be ready for the contact with the contact means 12 at one point as well as for the contact with the circuit breaker 3 at another point. A preferred embodiment comprises two individual earthing contacts, one for the contact with the contact means 12 and the other for the contact with the circuit breaker 3.

The preferred embodiment of a medium or high voltage switchgear apparatus described above comprises cables as the first current inlet / outlet system and bus bars as the second current inlet / outlet system. However, it is possible that both current inlet / outlet systems are formed by cables or by bus bars or that the first current inlet / outlet system is formed by bus bars and the second current inlet / outlet system is formed by cables.

## Claims

1. A method of earthing a first and a second current inlet / outlet systems (1, 2) in a medium or high voltage switchgear comprising a circuit breaker (3), **characterised in that** the method comprises the following steps:
a) switching OFF the circuit breaker (3);
b) connecting the circuit breaker (3) to the first current inlet / outlet system (1) as well as to an earthing contact;
c) switching the circuit breaker (3) ON;
d) providing a direct connection between the first current inlet / outlet system (1) and an earthing contact via a connecting element (6);
e) switching the circuit breaker (3) OFF;
f) disconnecting the circuit breaker (3) at least from the first current inlet / outlet system (1);
g) connecting the circuit breaker (3) between the second current inlet / outlet system (2) and an earthing contact; and
h) switching the circuit breaker (3) ON.

2. The method according to claim 1, **characterised in that** the first current inlet / outlet system (1) is formed by several mutually electrically connected cables, the second current inlet / outlet system is formed by several bus bars (2) and the circuit breaker (3) is a vacuum interrupter.

3. The method according to claim 1 or 2, **characterised in that** the connecting element (6) comprises a frame which is provided with one or more contact pieces (7) at its front part (9) to be connected to the first current inlet / outlet system (1) and with one or more contact means (12) to be connected to an earthing contact, wherein each of said one or more contact pieces (7) is electrically connected with the contact means (12) and said step d) comprises inserting the connecting element (6) into the switchgear.

4. The method according to claim 3, wherein the switchgear comprises a casing (5) and two guiding rails (11) attached parallel to each other at opposite side walls of the casing (5) **characterised in that** step d) comprises grasping the connecting element (6) using an insulating rod and sliding the connecting element (6) on the guiding rails (11) until said one or more contact pieces (7) are connected to the first current inlet / outlet system (1) and said one or more contact means (12) are connected to an earthing contact.

5. A medium or high voltage switchgear apparatus for making and breaking connection between a first and a second current inlet / outlet system (1, 2), the apparatus comprising a casing (5), inside which a first current inlet / outlet system (1), a second current inlet / outlet system (2), one or more earthing contacts and a circuit breaker (3) are disposed, whereas the circuit breaker (3) is movable relative to the first and to the second current inlet / outlet system (1, 2) to a position in which the circuit breaker (3) is connected between the first current inlet / outlet system (1) and the second current inlet / outlet system (2), to another position in which it is connected between the first current inlet / outlet system (1) and an earthing contact, and to yet another position in which it is connected between the second current inlet / outlet system (2) and an earthing contact, **characterised in that** the apparatus further comprises a movable connecting element (6) for making a connection between the first current inlet / outlet system (1) and an earthing contact when the circuit breaker (3) is switched ON and connected between the first current inlet / outlet system (1) and an earthing contact and for keeping the connection after the circuit breaker (3) has been switched OFF and disconnected at least from the first current inlet / outlet system (2).

6. The medium or high voltage switchgear apparatus according to claim 5, **characterised in that** the first current inlet / outlet system (1) is formed by several mutually electrically connected cables, the second current inlet / outlet system (2) is formed by several bus bars provided with several tee-offs and the circuit breaker (3) is a vacuum interrupter.

7. The medium or high voltage switchgear apparatus according to claim 5 or 6, **characterised in that** the circuit breaker (3) and / or the connecting element (6) is provided with a driving mechanism for moving the circuit breaker (3) to the required positions.

8. The medium or high voltage switchgear apparatus according to any of the claims 5 through 7, **characterised in that** the connecting element (6) comprises a frame which comprises one or more contact pieces (7) at its front part (9) to be connected to the first current inlet / outlet system (1) and at least one laterally arranged contact means (12) to be connected to an earthing contact, wherein each of said one or more contact pieces (7) are electrically connected with the contact means (12).

9. The medium or high voltage switchgear apparatus according to claim 8, **characterised in that** there are two guiding rails (11) attached parallel to each other at the side walls of the casing (5) and the connecting element (6) comprises at least two sliding areas or at least two wheels for sliding or driving the connecting element (6) in the required positions.

10. The medium or high voltage switchgear apparatus according to any of claims 5 through 9 **characterised in that** a locking device is provided at the connecting element (6) and / or at the casing (5) for locking the connecting element (6) in the position in which it is connected to the first current inlet / outlet system (1) and to the earthing contact.

11. The medium or high voltage switchgear apparatus according to claim 10, **characterised in that** the locking device comprises at least one spring loaded projection (10) extending sideways from the back part (8) of the connecting element (6) and being connected with a control linkage operable by means of a key, wherein the casing (5) and / or the rails (11) are provided with at least one recess accommodating the projection (10) when the connecting element (6) is locked connected to the first current inlet / outlet system (1) and to the earthing contact.

## Patentansprüche

1. Verfahren zur Erdung eines ersten sowie eines zweiten stromführenden Eingangs-/Ausgangssystems (1, 2) in einer Mittelspannungs- oder Hochspannungsschaltantage, die einen Schutzsehalter (3) umfasst,
**dadurch gekennzeichnet, dass** das Verfahren die folgenden Schritte umfasst:
a) Ausschalten des Schutzschalters (3);
b) Anschließen des Schutzschalters (3) an das erste stromführende Eingangs-/Ausgangssystem (1) sowie an einen Erdungskontakt;
c) Einschalten des Schutzschalters (3);
d) Herstellen einer direkten Verbindung zwischen dem ersten stromführenden Eingangs-/ Ausgangssystem (1) und dem Erdungskontakt mittels eines Verbindungselements (6);
e) Ausschalten des Schutzschalters (3);
f) Abtrennen des Schutzschalters (3) wenigstens von dem ersten stromführenden Eingangs-/ Ausgangssystem (1);
g) Herstellen einer Verbindung zwischen dem zweiten stromführenden Eingangs-/Ausgangssystem (2) und dem Erdungskontakt mittels des Schutzschalters (3); und
h) Einschalten des Schutzschalters (3).

2. Verfahren nach Anspruch 1, **dadurch gekennzeichnet, dass** das erste stromführende Eingangs-/Ausgangssystem (1) von mehreren miteinander elektrisch verbundenen Kabeln gebildet ist, das zweite stromführende Eingangs-/Ausgangssystem (2) von mehreren Stromschienen (2) gebildet ist und der Schutzschalter (3) als Vakuumtrennschalter ausgeführt ist.

3. Verfahren nach Anspruch 1 oder 2, **dadurch gekennzeichnet, dass** das Verbindungselement (6) einen Rahmen umfasst, der mit einem oder mehreren in dem vorderen Teil (9) des Rahmens angeordneten, zum Anschließen an das erste stromführende Einganges-/ Ausgangssystem (1) vorgesehenen Kontaktstücken (7) sowie mit einem oder mehreren zum Anschließen an den Erdungskontakt (12) vorgesehenen Kontaktmitteln (12) versehen ist, wobei der eine oder jeder der mehreren Kontaktstücke (7) mit den Kontaktmitteln (12) elektrisch verbunden ist und der Schritt d) das Einführen des Verbindungselements (6) in die Schaltanlage umfasst.

4. Verfahren nach Anspruch 3, wobei die Schaltanlage ein Gehäuse (5) und zwei parallel zueinander verlaufenden, an der gegenüberliegenden Seitenwänden des Gehäuses (5) angebrachten Führungsschienen (11) umfasst, **dadurch gekennzeichnet, dass** der Schritt d) das Greifen des Verbindungselements (6) mittels eines Isolierstabs und das Gleiten des Verbindungselements (6) auf den Führungsschienen (11) umfasst, wobei dies solange geschieht, bis der eine oder jeder der mehreren Kontaktstücke (7) mit dem ersten stromführende Eingangs-/ Ausgangssystem (1) und das eine oder jeder der mehreren Kontaktmitteln (12) mit dem Erdungskontakt verbunden worden sind.

5. Mittelspannungs- oder Hochspannungsschaltanlage zum Herstellen und Unterbrechen der Verbindung zwischen einem ersten und einem zweiten stromführenden Eingangs-/Ausgangssystem (1, 2), wobei die Anlage ein Gehäuse (5) umfasst, innerhalb dessen das erste stromführende Eingangs-/Ausgangssystem (1), das zweite stromführende Eingangs-/Ausgangssystem (2), ein oder mehrere Erdungskontakte sowie ein Schutzschalter (3) angeordnet sind, wobei der Schutzschalter (3) bewegbar gegenüber dem ersten und dem zweiten stromführenden Eingangs-/Ausgangssystem (1, 2) ist, und zwar in eine Stellung, in welcher der Schutzschalter (3) die Verbindung zwischen dem ersten stromführenden Eingangs-/ Ausgangssystem (1) und dem zweiten stromführenden Einganges-/ Ausgangssystem (2) herstellt, in die weitere Stellung, in welcher derselbe die Verbindung zwischen dem ersten stromführenden Eingangs-/Ausgangssystem (1) und dem Erdungskontakt herstellt, und schließlich in eine noch weitere Stellung, in welcher derselbe die Verbindung zwischen dem zweiten stromführenden Eingangs-/ Ausgangssystem (2) und dem Erdungskontakt herstellt, **dadurch gekennzeichnet, dass** die Anlage ferner ein bewegbares Verbindungselement (6) umfasst, das zum Herstellen der Verbindung zwischen dem ersten stromführende Einganges-/ Ausgangssystem (1) und dem Erdungskontakt beim eingeschalteten und somit den ersten stromführenden Eingangs-/ Ausgangssystem (1) mit Erdungskontakt verbindenden Schutzschalter (3) sowie zum Aufrechterhalten der Verbindung nach dem Ausschalten des Schutzschalter (3) und dessen Trennung wenigstens von dem ersten stromführenden Eingangs-/ Ausgangssystem (1) vorgesehen ist.

6. Mittelspannungs- oder Hochspannungsschaltanlage nach Anspruch 5, **dadurch gekennzeichnet, dass** das erste stromführende Eingangs-/Ausgangssystem (1) von mehreren miteinander elektrisch verbundenen Kabeln gebildet ist, das zweite stromführende Eingangs-/Ausgangssystem (2) von mehreren mit Abzweigen versehenen Stromschienen (2) gebildet ist und der Schutzschalter (3) als Vakuumtrennschalter ausgeführt ist.

7. Mittelspannungs- oder Hochspannungsschaltanlage nach Anspruch 5 oder 6, **dadurch gekennzeichnet, dass** der Schutzschalter (3) und/oder das Verbindungselement (6) mit einem Antriebsmechanismus zum Bewegen des Schutzschalters (3) in die gewünschten Stellungen.

8. Mittelspannungs- oder Hochspannungsschaltanlage nach einem der Ansprüche 5 bis 7, **dadurch gekennzeichnet dass** das Verbindungselement (6) einen Rahmen umfasst, der mit einem oder mehreren in dem vorderen Teil (9) des Rahmens angeordneten, zum Anschließen an das erste stromführende Eingangs-/ Ausgangssystem (1) vorgesehenen Kontaktstücken (7) sowie mit einem oder mehreren querdurch verlaufenden, zum Anschließen an den Erdungskontakt (12) vorgesehenen Kontaktmitteln (12) versehen ist, wobei der eine oder jeder der mehreren Kontaktstücke (7) mit den Kontaktmitteln (12) elektrisch verbunden ist.

9. Mittelspannungs- oder Hochspannungsschaltanlage nach Anspruch 8, **dadurch gekennzeichnet, dass** ferner zwei parallel zueinander verlaufenden, an der gegenüberliegenden Seitenwänden des Gehäuses (5) angebrachten Führungsschienen (11) vorgesehen sind und das Verbindungselement (6) wenigstens zwei Gleitflächen oder wenigstens zwei Räder zum Verschieben bzw. Anfahren des Verbindungselements (3) in die gewünschten Stellungen umfasst.

10. Mittelspannungs- oder Hochspannungsschaltanlage nach einem der Ansprüchen 5 bis 9, **dadurch gekennzeichnet, dass** das Verbindungselement (6) und/oder das Gehäuse (5) mit einer Verriegelungsvorrichtung zum Verriegeln des Verbindungselements (6) in einer Stellung versehen ist, in welcher das letztere mit dem ersten stromführenden Eingangs-/ Ausgangssystem (1) sowie mit dem Erdungskontakt verbunden ist.

11. Mittelspannungs- oder Hochspannungsschaltanlage nach Anspruch 10, **dadurch gekennzeichnet, dass** die Verriegelungsvorrichtung wenigstens einen federbelasteten Vorsprung (10) umfasst, das sich seitlich von dem hinteren Teil (8) des Verbindungselements (6) erstreckt und mit einem mittels eines Keils betätigbaren Gestänge verbunden ist, wobei das Gehäuse (5) und/oder die Führungsschienen (11) mit wenigstens einer Aussparung versehen ist, die den Vorsprung (10) aufnimmt, wenn das Verbindungselement (6) in einer das erste stromführende Eingangs-/ Ausgangssystem (1) mit Erdungskontakt verbindenden Stellung verriegelt ist.

## Revendications

1. Procédé de mise à la terre d'un premier et d'un deuxième système d'entrée / sortie de courant (1, 2) dans un appareil de commutation à moyenne ou haute tension comprenant un disjoncteur (3),
**caractérisé en ce que** le procédé comprend les étapes suivantes :
a) mise hors tension du disjoncteur (3) ;
b) connexion du disjoncteur (3) au premier système d'entrée / sortie de courant (1) ainsi qu'à un contact de mise à la terre ;
c) mise sous tension du disjoncteur (3) ;
d) établissement d'une connexion directe entre le premier système d'entrée / sortie de courant (1) et un contact de mise à la terre via un élément de connexion (6) ;
e) mise hors tension du disjoncteur (3) ;
f) déconnexion du disjoncteur (3) au moins du premier système d'entrée / sortie de courant (1) ;
g) connexion du disjoncteur (3) entre le deuxième système d'entrée / sortie de courant (2) et un contact de mise à la terre ; et
h) mise sous tension du disjoncteur (3).

2. Procédé selon la revendication 1, **caractérisé en ce que** le premier système d'entrée / sortie de courant (1) est formé par plusieurs câbles mutuellement connectés électriquement, le deuxième système d'entrée / sortie de courant est formé par plusieurs barres omnibus (2) et le disjoncteur (3) est un interrupteur à vide.

3. Procédé selon la revendication 1 ou 2, **caractérisé en ce que** l'élément de connexion (6) comprend un cadre qui est pourvu d'une ou plusieurs pièces de contact (7) dans sa partie avant (9), prévues pour être connectées au premier système d'entrée / sortie de courant (1), et d'un ou plusieurs moyens de contact (12) prévus pour être connectés à un contact de mise à la terre, chacune desdites une ou plusieurs pièces de contact (7) étant connectée électriquement au(x) moyen(s) de contact (12) et ladite étape d) comprenant l'insertion de l'élément de connexion (6) dans l'appareil de commutation.

4. Procédé selon la revendication 3, dans lequel l'appareil de commutation comprend un boîtier (5) et deux rails de guidage (11) fixés parallèlement l'un à l'autre à des parois latérales opposées du boîtier (5), **caractérisé en ce que** l'étape d) comprend la saisie de l'élément de connexion (6) au moyen d'une perche isolante et le coulissement de l'élément de connexion (6) sur les rails de guidage (11) jusqu'à ce que lesdites une ou plusieurs pièces de contact (7) soient connectées au premier système d'entrée / sortie de courant (1) et que lesdits un ou plusieurs moyens de contact (12) soient connectés à un contact de mise à la terre.

5. Appareil de commutation à moyenne ou haute tension pour établir et couper la connexion entre un premier et un deuxième système d'entrée / sortie de courant (1, 2), l'appareil comprenant un boîtier (5), à l'intérieur duquel sont disposés un premier système d'entrée / sortie de courant (1), un deuxième système d'entrée / sortie de courant (2), un ou plusieurs contacts de mise à la terre et un disjoncteur (3), le disjoncteur (3) pouvant être déplacé par rapport au premier et au deuxième système d'entrée / sortie de courant (1, 2) vers une position dans laquelle le disjoncteur (3) est connecté entre le premier système d'entrée / sortie de courant (1) et le deuxième système d'entrée / sortie de courant (2), vers une autre position dans laquelle il est connecté entre le premier système d'entrée / sortie de courant (1) et un contact de mise à la terre, et vers encore une autre position dans laquelle il est connecté entre le deuxième système d'entrée / sortie de courant (2) et un contact de mise à la terre, **caractérisé en ce que** l'appareil comprend également un élément de connexion (6) mobile pour établir une connexion entre le premier système d'entrée / sortie de courant (1) et un contact de mise à la terre quand le disjoncteur (3) est mis sous tension et connecté entre le premier système d'entrée / sortie de courant (1) et un contact de mise à la terre et pour maintenir la connexion après que le disjoncteur (3) a été mis hors tension et déconnecté au moins du premier système d'entrée / sortie de courant (2).

6. Appareil de commutation à moyenne ou haute tension selon la revendication 5, **caractérisé en ce que** le premier système d'entrée / sortie de courant (1) est forme par plusieurs câbles mutuellement connectés électriquement, le deuxième système d'entrée / sortie de courant (2) est formé par plusieurs barres omnibus pourvues de plusieurs dérivations en T et le disjoncteur (3) est un interrupteur à vide.

7. Appareil de commutation à moyenne ou haute tension selon la revendication 5 ou (6, **caractérisé en ce que** le disjoncteur (3) et/ou l'élément de connexion (6) est pourvu d'un mécanisme d'entraînement pour déplacer le disjoncteur (3) vers les positions requises.

8. Appareil de commutation à moyenne ou haute tension selon une quelconque des revendications 5 à 7, **caractérisé en ce que** l'élément de connexion (6) comprend un cadre qui comporte une ou plusieurs pièces de contact (7) sur sa partie avant (9), prévues pour être connectées au premier système d'entrée / sortie de courant (1) et au moins un moyen de contact (12) agencé latéralement, prévu pour être connecté à un contact de mise à la terre, chacune desdites une ou plusieurs pièces de contact (7) étant connectée électriquement au(x) moyen(s) de contact (12).

9. Appareil de commutation à moyenne ou haute tension selon la revendication 8, **caractérisé en ce que** deux rails de guidage (11) sont fixés parallèlement l'un à l'autre aux parois latérales du boîtier (5) et l'élément de connexion (6) comprend au moins deux zones de coulissement et au moins deux roues pour faire coulisser ou entraîner l'élément de connexion (6) dans les positions requises.

10. Appareil de commutation à moyenne ou haute tension selon une quelconque des revendications 5 à 9, **caractérisé en ce qu'**un dispositif de verrouillage est prévu sur l'élément de connexion (6) et/ou sur le boîtier (5) pour verrouiller l'élément de connexion (6) dans la position dans laquelle il est connecté au premier système d'entrée / sortie de courant (1) et au contact de mise à la terre.

11. Appareil de commutation à moyenne ou haute tension selon la revendication 10, **caractérisé en ce que** le dispositif de verrouillage comprend au moins une saillie chargée par ressort (10) qui s'étend latéralement depuis la partie arrière (8) de l'élément de connexion (6) et qui est reliée à une tringlerie de commande manoeuvrable au moyen d'une clé, le boîtier (5) et/ou les rails (11) étant pourvus d'au moins un évidement pour recevoir la saillie (10) quand l'élément de connexion (6) est verrouillé en étant connecté au premier système d'entrée / sortie de courant (1) et au contact de mise à la terre.
